(19) Europäisches Patentamt
European Patent Office
Office européen des brevets

(11) **EP 2 019 303 B1**

(12) **EUROPÄISCHE PATENTSCHRIFT**

(45) Veröffentlichungstag und Bekanntmachung des Hinweises auf die Patenterteilung:
**21.04.2010 Patentblatt 2010/16**

(51) Int Cl.:
***G01M 1/22*** *(2006.01)*

(21) Anmeldenummer: **07014810.1**

(22) Anmeldetag: **27.07.2007**

(54) **Verfahren zum Auswuchten eines Fahrzeugrades**

Method for balancing a vehicle wheel

Procédé destiné à l'équilibrage d'une roue de véhicule

(84) Benannte Vertragsstaaten:
**DE ES FR GB IT**

(43) Veröffentlichungstag der Anmeldung:
**28.01.2009 Patentblatt 2009/05**

(73) Patentinhaber: **Snap-on Equipment Srl a unico socio**
**42015 Correggio (Reggio Emilia) (IT)**

(72) Erfinder: **Braghiroli, Francesco**
**42100 Reggio Emilia (IT)**

(74) Vertreter: **Fritsche, Rainer**
**Eisenführ, Speiser & Partner**
**Postfach 31 02 60**
**80102 München (DE)**

(56) Entgegenhaltungen:
| | |
|---|---|
| **EP-A- 0 290 867** | **US-A- 4 854 168** |
| **US-A- 4 891 981** | **US-A- 5 355 729** |
| **US-A1- 2004 244 483** | **US-A1- 2005 274 179** |

**Beschreibung**

Die Erfindung betrifft ein Verfahren zum Auswuchten eines Fahrzeugrades.

Aus US 4,854,168 ist es bekannt, in einem Messlauf am rotierenden Fahrzeugrad aus einer Radunwucht resultierende Kräfte zu messen. Aus den gemessenen Kräften werden für einen dynamischen Unwuchtauslauf in zwei zur Rotorachse senkrechten Ausgleichsebenen am Fahrzeugrad in vorgegebenen Massestufen, beispielsweise von 5 g zur Verfügung stehende Unwuchtausgleichsmassen in zugeordneten Drehwinkellagen berechnet. Ferner wird hieraus ein statischer Unwuchtvektor durch Vektoraddition bestimmt. Der Unwuchtausgleich in den beiden Ausgleichsebenen erfolgt so, dass die statische Restunwucht minimiert wird. Hierdurch werden Schwingungen, die sich beim Fahren des Kraftfahrzeugs als Lenkungsunruhen bemerkbar machen und im wesentlichen aus der statischen Restunwucht resultieren, vermieden. In der Mehrzahl der Fälle werden für den Unwuchtausgleich Gewichte in einer solchen Anzahl und Größe verwendet, welche für eine hinreichende Qualität des Unwuchtausgleiches in der Praxis nicht erforderlich sind.

Aufgabe der Erfindung ist es, ein Verfahren der eingangs genannten Art zu schaffen, bei welchem ein Unwuchtausgleich am Fahrzeugrad mit hinreichender Qualität für den Fahrbetrieb erreicht wird.

Diese Aufgabe wird durch die Merkmale des Patentanspruches 1 gelöst, wobei in den Unteransprüchen vorteilhafte Weiterbildungen der Erfindung angegeben sind.

Bei der Erfindung werden in einem Messlauf am rotierenden Fahrzeugrad die aus einer Radunwucht resultierenden Kräfte gemessen. Aus den gemessenen Kräften werden für einen dynamischen Unwuchtausgleich in zwei zur Radachse senkrechten Ausgleichsebene und ferner für einen statischen Unwuchtausgleich in einer Ausgleichsebene am Fahrzeugrad jeweilige in vorgegebenen Massenstufen zur Verfügung stehende Unwuchtausgleichsmassen in zugeordneten Drehwinkellagen um die Radachse berechnet. In herkömmlicher Weise können die Unwuchtausgleichsmassen in 5 g-Massestufen oder einem Vielfachen von 5 g zur Verfügung stehen.

Bei der Berechnung der jeweiligen Unwuchtausgleichsmasse ist die zulässige Masseabweichung (Toleranz) von der jeweiligen den gemessenen Kräften entsprechenden exakten Unwuchtausgleichsmasse für den dynamischen Unwuchtausgleich größer ist als die zulässige Massenabweichung (Toleranz) für den statischen Unwuchtausgleich. Die jeweils berechnete Unwuchtausgleichsmasse wird als Ausgleichsgewicht in der zugeordneten Winkellage und zugeordneten Ausgleichsebene am Fahrzeugrad befestigt.

Die Masseabweichung für den dynamischen Unwuchtausgleich kann mindestens doppel so groß bemessen sein, wie die Masseabweichung für den statischen Unwuchtausgleich. Beispielsweise kann die Masseabweichung für den statischen Unwuchtausgleich 5 g betragen und die Masseabweichung für den dynamischen Unwuchtausgleich kann beispielsweise von 10 g bis 30 g betragen. Die Bemessung der Masseabweichung kann in Abhängigkeit vom Fahrzeugtyp erfolgen. Beispielsweise kann für sogenannte SUV-Fahrzeuge oder Wohnmobile und dergleichen die Masseabweichung das 1,5-fache von der für Personenkraftwagen oder Motorräder zulässigen Masseabweichung betragen. Für leichte Nutzfahrzeuge kann die Masseabweichung etwa das Doppelte der für Personenkraftwagen und Motorräder zulässigen Masseabweichung betragen.

Wenn sich bei der Berechnung der Unwuchtausgleichsmasse ergibt, dass die für den dynamischen Unwuchtausgleich berechneten Unwuchtausgleichsmassen innerhalb der zugeordneten Toleranz liegen, schaltet die Rechnereinrichtung (Computer) vorzugsweise automatisch auf die Berechnung der Unwuchtausgleichsmasse und des zugeordneten Drehwinkels für den statischen Unwuchtausgleich um. Bei dieser Berechnung wird vorzugsweise berücksichtigt, dass das Fahrzeugrad auch innerhalb der für den dynamischen Unwuchtausgleich vorgegebenen Toleranz ausgewuchtet wird.

Wenn das Fahrzeugrad dynamisch ausgewuchtet wird, erfolgt dieser Unwuchtausgleich so, dass auch der statische Unwuchtausgleich innerhalb der dafür vorgegebenen Toleranz erfolgt.

Ein Unwuchtausgleich erübrigt sich, wenn sowohl die für den dynamischen Unwuchtausgleich als auch die für die statischen Unwuchtausgleich jeweils berechneten Unwuchtausgleichsmassen innerhalb der vorgegebenen Toleranzen liegen. Dabei können durch schrittweises Ändern der Winkellagen der jeweiligen Unwuchtausgleichsmassen für den dynamischen Unwuchtausgleich als auch für den statischen Unwuchtausgleich die sich ergebenden Ausgleichsmassen bestimmt werden und für den durchzuführenden Unwuchtausgleich werden die berechneten Unwuchtausgleichsmassen verwendet, welche innerhalb der vorbestimmten Toleranzen für den dynamischen und statischen Unwuchtausgleich liegen und bei denen die Summe der Ausgleichsmassen die niedrigste ist. Die entsprechenden Unwuchtausgleichsgewichte werden dann an den zugeordneten, bei der Berechnung ermittelten Drehwinkellagen am Fahrzeugrad in den entsprechenden Ausgleichsebenen befestigt.

Neben der Einsparung von Unwuchtausgleichsgewichten kann bei der Erfindung auch eine Verkürzung der Messlaufzeit erreicht werden. Hierzu werden beim Messlauf wenigstens zwei Umdrehungen mit der Messdrehzahl durchgeführt, wobei die jeweiligen Unwuchtausgleichsmassen und zugeordneten Drehwinkelpositionen berechnet werden. Der Messlauf wird dann angehalten, wenn die bei den nachfolgenden Umdrehungen berechneten Unwuchtausgleichsmassen innerhalb der vorgegebenen Toleranzen bleiben. Hierbei kann aus den bei den jeweiligen Umdrehungen berechneten Unwuchtausgleichsmassen der jeweils sich ergebende Mittelwert berechnet werden. Sobald diese Mittelwerte auch bei der nachfolgenden Drehung innerhalb der vorgegebenen Toleranzen bleiben, wird der Messlauf unterbrochen.

Anhand der Figur wird die Erfindung noch näher erläutert.

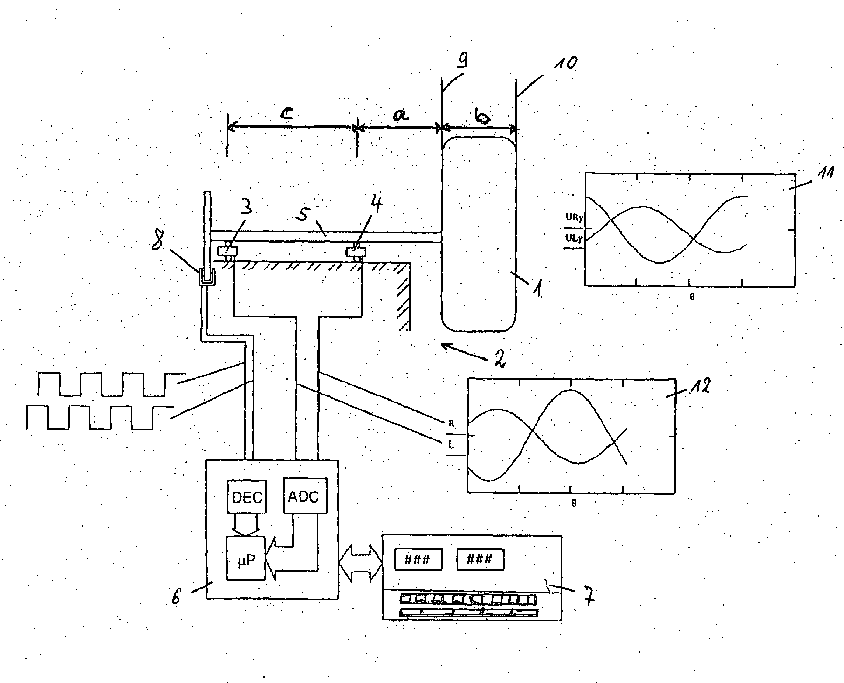

In der Figur ist schematisch eine Messanordnung einer Radauswuchtmaschine 2 dargestellt. Die Messanordnung beinhaltet Kraftwandler 3, 4, welche an einer Messwelle 5 der Radauswuchtmaschine 2 abgestützt sind. An der Messwelle 5 ist in bekannter Weise ein Fahrzeugrad 1, insbesondere Kraftfahrzeugrad zentriert befestigt. Mit der Messwelle 5 ist ein Winkelsensor 8 verbunden, welcher den jeweiligen Drehwinkel des Fahrzeugrades 1 erfasst und ein entsprechendes elektrisches Signal, welches die jeweiligen Winkelinkremente beinhaltet, an eine Auswerteeinrichtung 6 weiterleitet. Die von den Kraftwandlern 3 und 4 erzeugten elektrischen sinusförmigen Kraftschwankungssignale L und R, welche vom linken Kraftwandler 3 und vom rechten Kraftwandler 4 geliefert werden, sind in der Darstellung 12 in der Fig. 4 auf den vom Winkelsensor 8 gemessenen Drehwinkel θ bezogen dargestellt. Diese Kraftschwankungssignale L und R werden der Auswerteeinrichtung 6 zugeleitet.

Die Drehwinkelsignale des Winkelsensors 8 werden in der Auswerteeinrichtung 6 über einen Decoder DEC der elektronischen Rechnereinrichtung μP zugeleitet. Die Kraftschwankungssignale L und R der Kraftwandler 3 und 4 werden über einen Analog-/Digital-Coder ADC dem elektronischen Rechner μP in der Auswerteeinrichtung 6 zugeleitet. Ferner werden die Geometriedaten der Messeinrichtung und des auszuwuchtenden Fahrzeugrades 1 in die elektronische Rechnereinrichtung μP eingegeben. Es handelt sich hier um den Abstand b von Ausgleichsebenen 9 und 10, in welchen zu berechnende Unwuchtausgleichsgewichte eingesetzt werden. Ferner werden die Radien, in welchen die Unwuchtausgleichsgewichte in den Ausgleichsebenen 9 und 10 eingegeben werden, ebenfalls für die Berechnung in den elektronischen Rechner der Auswerteeinrichtung 6 eingegeben. Außerdem werden die Abstände a und c bei der Rechenarbeit des elektronischen Rechners in der Auswerteeinrichtung 6 berücksichtigt. Bei dem Abstand c handelt es sich um den fest vorgegebenen Abstand der Messwandler 3 und 4 voneinander und beim Abstand a handelt es sich um den Abstand der innenliegenden Ausgleichsebene 9 vom außenliegenden (rechten) Messwandler 4.

Unter Berücksichtigung der dem jeweiligen Fahrzeugrad zugeordneten Geometriedaten werden aus den beiden sinusförmigen Kraftschwankungssignalen L und R für die beiden Ausgleichsebenen 9 und 10 sinusförmige Schwankungssignale $U_L$ und $U_R$ für Unwuchtausgleichsmassen bezogen auf den Drehwinkel θ berechnet. Die jeweiligen Maxima dieser Schwankungssignale entsprechen Unwuchtausgleichsmassen, welche bei der Anordnung in den zugeordneten Drehwinkellagen in der jeweiligen Ausgleichsebene 9 und 10 einen exakten dynamischen Unwuchtausgleich bewirken und entsprechen Unwuchtausgleichsvektoren $\vec{U}_L$ in der linken (inneren) Ausgleichsebene und $\vec{U}_R$ in der rechten (äußeren) Ausgleichsebene.

Die Ausgleichsebene $\vec{U}_L$ und $\vec{U}_R$ errechnen sich aus dem folgenden Gleichungssystem.

$$\bar{L} = \frac{\vec{U}_L a + \vec{U}_R (a+b)}{c}$$

$$\bar{R} = \frac{\vec{U}_L (a+c) + \vec{U}_R (a+b+c)}{c}$$

Wie sich aus den jeweiligen Maxima der in der Darstellung 11 dargestellten Schwankungssignale für die Unwuchtausgleichsmassen ergebenden Unwuchtausgleichsmassen in den zugeordneten Drehwinkellagen repräsentieren reine dynamische Unwuchtausgleichsvektoren $\vec{U}_L$ und $\vec{U}_R$ Hieraus errechnet sich ein rein statischer Unwuchtausgleichsvektor $\vec{U}_S$, welcher ebenfalls eine in einer bestimmten Drehwinkelposition einer Ausgleichsebene angeordneten Unwuchtausgleichsmasse entspricht aus folgendem Gleichungssystem.

$$\vec{U}_L = \frac{\vec{U}_s}{2} + \vec{U}_{DL} \ , \ \vec{U}_R = \frac{\vec{U}_s}{2} + \vec{U}_{DR}$$

Hierin bedeuten $\vec{U}_S$ die rein statische Vektorkomponente, welche die rein statische Unwuchtausgleichsmasse $U_S$ und die zugeordnete Drehwinkelposition in einer Ausgleichsebene, in welcher der statische Unwuchtausgleich erfolgt, beinhaltet.

$\vec{U}_{DL}$ bedeutet den Unwuchtausgleichsvektor, welcher die Unwuchtausgleichsmasse $U_{DL}$ und die zugeordnete Drehwinkelposition in der linken (inneren) Ausgleichsebene 9 beinhaltet.

$\vec{U}_{DR}$ bedeutet den Unwuchtausgleichsvektor in der äußeren (rechten) Ausgleichsebene 10, welcher die Unwuchtausgleichsmasse $U_{DL}$ und die zugeordnete Drehwinkelposition in der äußeren (rechten) Ausgleichsebene beinhaltet.

Für den Unwuchtausgleichsvorgang werden für die rein statische Unwuchtausgleichsmasse und für die beiden rein dynamischen Unwuchtausgleichsmassen unterschiedliche zulässige Masseabweichungen (Toleranzen) vorgegeben. Dabei ist die zulässige Masseabweichung (Toleranz) für die statische Unwuchtausgleichsmasse $U_s$ kleiner als für die beiden dynamischen Unwuchtausgleichsmassen $U_{DL}$ und $U_{DR}$. Die zulässigen Masseabweichungen (Toleranzen) für die berechneten rein dynamischen Unwuchtausgleichsmassen $U_{DL}$ und $U_{DR}$ sind vorzugsweise mindestens um das zweifache größer bemessen als die zulässige Masseabweichung (Toleranz) für die errechnete rein statische Unwuchtausgleichsmasse $U_S$. Die zulässige Masseabweichung für die rein statische Unwuchtausgleichsmasse kann beispielsweise 5 g betragen, während die zulässige Masseabweichung bei den beiden rein dynamischen Unwuchtausgleichsmassen 10 g oder mehr, insbesondere 10 g bis 30 g betragen kann.

Für die Masseabweichung kann die Masse der geringsten Massestufe beispielsweise 5 g, welche für den Unwuchtausgleich zur Verfügung steht, oder ein ganzzahliges Vielfaches davon bestimmt werden. Beispielsweise mit Hilfe einer an einer Anzeige- und Eingabeeinrichtung 7 vorhandenen Tastatur oder anderen Eingabemitteln können die Toleranzen für die rein statische Unwuchtausgleichsmasse und die rein dynamischen Unwuchtausgleichsmassen in den Rechner μP der Auswerteeinrichtung 6 eingegeben werden.

Bei der Berechnung der Unwuchtausgleichsmassen für den dynamischen Unwuchtausgleich werden die Winkellagen für die Unwuchtausgleichsmassen in den beiden Ausgleichsebenen schrittweise beispielsweise in den Schritten von 10 Grad geändert und die sich dabei ergebenden dynamischen Unwuchtausgleichsmassen und die sich daraus ergebende statische Unwuchtausgleichsmasse auf der Basis der beiden sinusförmigen Schwankungssignale $\overline{U}_L$ und $\overline{U}_R$ (Signaldarstellung 11 in der Figur) jeweils bestimmt. Für den dynamischen Unwuchtausgleich werden die Unwuchtausgleichsmassen verwendet, bei denen die Toleranzen eingehalten werden und die Summe der Unwuchtausgleichsmassen am geringsten ist. Für die Berechnung eines rein statischen Unwuchtausgleichs welcher vorzugsweise automatisch dann erfolgt, wenn die zunächst berechneten Unwuchtausgleichsmassen für den dynamischen Unwuchtausgleich innerhalb der Toleranzen liegen, wird zunächst die geeignete Ausgleichsebene, in welcher der statische Unwuchtsausgleich erfolgen soll, ausgewählt. Vorzugsweise wird dabei die Ebene ausgewählt, in welcher die berechnete größere dynamische Unwuchtausgleichsmasse liegt. Für die Bestimmung der in dieser Ausgleichsebene liegenden statischen Unwuchtausgleichsmasse wird die Drehwinkellage geändert bis auf der Basis der Schwankungssignale $\overline{U}_L \overline{U}_R$ (sinusförmige Signaldarstellungen bei 11 in der Figur) die für den dynamischen und statischen Unwuchtausgleich vorgegebenen Toleranzen erreicht oder unterschritten sind.

Die beim dynamischen oder statischen Unwuchtausgleich berechneten Unwuchtausgleichsmassen werden in einer Anzeigeeinheit der Anzeige- und Eingabeeinrichtung 7 angezeigt. Entsprechend bemessene Unwuchtausgleichsgewichte werden dann in den ebenfalls angezeigten Winkellagen in den beiden Ausgleichsebenen 9 und 10 beim dynamischen Unwuchtausgleich und beim statischen Unwuchtausgleich in einer der beiden Ausgleichsebenen 9, 10 befestigt.

Wie oben schon erläutert kann dann, wenn während der im Messlauf erfolgenden Raddrehungen sich für die statische Unwuchtausgleichsmasse und die dynamischen Unwuchtausgleichsmassen Werte ergeben, die innerhalb der Toleranzen bei mindestens zwei aufeinanderfolgenden Umdrehungen liegen, der Messlauf beendet werden. Hierdurch lässt sich gegenüber bekannten Unwuchtmessläufen eine Verkürzung der Messlaufzeit erreichen.

**Patentansprüche**

1. Verfahren zum Auswuchten eines Fahrzeugrades bei dem

    • in einem Messlauf am rotierenden Fahrzeugrad aus einer Radunwucht resultierende Kräfte gemessen werden,
    • aus den gemessenen Kräften für einen dynamischen Unwuchtausgleich in zwei zur Rotorachse senkrechten Ausgleichsebenen und für einen statischen Unwuchtausgleich in einer Ausgleichsebene am Fahrzeugrad jeweilige in vorgegebenen Massestufen zur Verfügung stehende Unwuchtausgleichsmassen in bestimmten Drehwinkellagen um die Radachse berechnet werden, wobei
    • bei der Berechnung der jeweiligen Unwuchtausgleichsmasse die zulässige Masseabweichung von der jeweiligen den gemessenen Kräften entsprechenden exakten Unwuchtausgleichsmasse für den dynamischen Unwuchtausgleich größer ist als die zulässige Masseabweichung für den statischen Unwuchtausgleich und
    • ein der jeweils berechneten Unwuchtausgleichsmasse entsprechendes Ausgleichsgewicht in der zugeordneten Winkellage und der zugeordneten Augleichsebene am Fahrzeugrad befestigt wird.

2. Verfahren nach Anspruch 1 **dadurch gekennzeichnet, dass** die Masseabweichung für den dynamischen Unwuchtausgleich zumindest doppelt so groß bemessen ist wie die Masseabweichung für den statischen Unwuchtausgleich.

3. Verfahren nach Anspruch 1 oder 2 **dadurch gekennzeichnet, dass** die Masseabweichung der geringsten Massestufe, welche für den Unwuchtausgleich zur Verfügung steht, oder einem ganzzahligen Vielfachen davon entspricht.

4. Verfahren nach einem der Ansprüche 1 bis 3 **da-**

**durch gekennzeichnet, dass** dann, wenn die berechneten Unwuchtausgleichsmassen für den dynamischen Unwuchtausgleich innerhalb der Toleranz liegen, auf den statischen Unwuchtausgleich automatisch umgeschaltet wird.

5. Verfahren nach einem der Ansprüche 1 bis 4 **dadurch gekennzeichnet, dass** beim statischen Unwuchtausgleich gleichzeitig ein dynamisches Auswuchten innerhalb der dafür vorgegebenen Toleranz erfolgt.

6. Verfahren nach einem der Ansprüche 1 bis 4 **dadurch gekennzeichnet, dass** beim dynamischen Unwuchtausgleich gleichzeitig ein statischer Unwuchtausgleich innerhalb der dafür vorgegebenen Toleranz erfolgt.

7. Verfahren nach Anspruch 5 **dadurch gekennzeichnet, dass** bei der Berechnung der Unwuchtausgleichsmasse für den statischen Unwuchtausgleich die Ausgleichsebene ausgewählt wird, in welcher die berechnete größere Unwuchtausgleichsmasse liegt und die Drehwinkellage für die Ausgleichsmasse schrittweise geändert wird bis die für den dynamischen und statischen Unwuchtausgleich vorgegebenen Toleranzen erreicht oder unterschritten sind.

8. Verfahren nach Anspruch 6 **dadurch gekennzeichnet, dass** bei der Berechnung der Unwuchtausgleichsmassen für den dynamischen Unwuchtausgleich die Winkellagen für den Unwuchtausgleich in den beiden Ausgleichsebenen mit gleichzeitiger Berechnung der statischen Unwuchtausgleichsmasse aus den jeweils sich ergebenden dynamischen Unwuchtausgleichsmassen geändert werden und die dabei ermittelten Unwuchtausgleichsmassen in den Winkellagen für den dynamischen Unwuchtausgleich verwendet werden, bei denen die Summe der Unwuchtausgleichsmassen am niedrigsten ist.

9. Verfahren nach einem der Ansprüche 1 bis 8 **dadurch gekennzeichnet, dass** der Messlauf dann angehalten wird, wenn die aus den Messergebnissen von wenigstens zwei aufeinanderfolgenden Radumdrehungen berechneten Unwuchtausgleichsmassen innerhalb der vorgegebenen Toleranzen liegen.

10. Verfahren nach Anspruch 9 **dadurch gekennzeichnet, dass** Mittelwerte der während aufeinander folgender Messläufe berechneter Unwuchtausgleichsmassen gebildet werden und der Messlauf dann abgebrochen wird, wenn die Mittelwerte der berechneten Unwuchtausgleichsmassen innerhalb der vorgegebenen Toleranzen liegen.

## Claims

1. A method of balancing a vehicle wheel wherein

   - forces resulting from a wheel unbalance are measured in a measuring run on the rotating vehicle wheel,
   - the measured forces are used as a basis for calculating respective balancing masses available in predetermined mass stages in given rotary angle positions about the wheel axis for dynamic balancing in two balancing planes which are perpendicular to the rotor axis and for static balancing in a balancing plane on the vehicle wheel, wherein
   - in the calculation of the respective balancing mass the permissible mass deviation from the respective exact balancing mass corresponding to the measured forces is greater for dynamic balancing than the permissible mass deviation for static balancing, and
   - a balancing weight corresponding to the respectively calculated balancing mass is fixed to the vehicle wheel in the associated angular position and the associated balancing plane.

2. A method according to claim 1,
   **characterised in that** the mass deviation for dynamic balancing is at least twice as great as the mass deviation for static balancing.

3. A method according to claim 1 or claim 2,
   **characterised in that** the mass deviation corresponds to the smallest mass stage available for balancing or an integral multiple thereof.

4. A method according to one of claims 1 to 3,
   **characterised in that** when the calculated balancing masses for dynamic balancing lie within the tolerance the procedure is automatically switched over to static balancing.

5. A method according to one of claims 1 to 4,
   **characterised in that** in static balancing dynamic balancing is simultaneously effected within the tolerance predetermined for same.

6. A method according to one of claims 1 to 4,
   **characterised in that** in dynamic balancing static balancing is simultaneously effected within the tolerance predetermined for same.

7. A method according to claim 5,
   **characterised in that** in the calculation of the balancing mass for static balancing the balancing plane in which the calculated greater balancing mass is disposed is selected and the rotary angle position for the balancing mass is altered stepwise until the tolerances which are predetermined for dynamic and static balancing are reached or the values involved are below said tolerances.

8. A method according to claim 6, **characterised in that** in calculation of the balancing masses in respect of dynamic balancing the angular positions for balancing in the two balancing planes are altered with simultaneous calculation of the static balancing mass from the respectively resulting dynamic balancing masses and the balancing masses which are ascertained **in that** case are used in the angular positions for dynamic balancing, at which the total of the balancing masses is at the lowest.

9. A method according to one of claims 1 to 8, **characterised in that** the measuring run is stopped when the balancing masses calculated from the measurement results of at least two successive revolutions of the wheel are within the predetermined tolerances.

10. A method according to claim 9, **characterised in that** average values of the balancing masses calculated during successive measuring runs are formed and the measuring run is terminated when the average values of the calculated balancing masses lie within the predetermined tolerances.

## Revendications

1. Procédé d'équilibrage d'une roue de véhicule, dans lequel

   • on mesure dans une opération de mesure sur la roue du véhicule, alors qu'elle tourne, des forces provenant d'un balourd de la roue,
   • à partir des forces mesurées, on calcule, pour une compensation dynamique du balourd, dans deux plans de compensation perpendiculaires à l'axe du rotor et, pour une compensation statique du balourd, dans un plan de compensation sur la roue du véhicule, des masses de compensation du balourd respectives disponibles en des échelons de masse prescrites en des positions angulaires de rotation déterminées autour de l'axe de la roue, dans lequel
   • lors du calcul des masses de compensation du balourd respectives, l'écart de masse, admissible par rapport à la masse de compensation du balourd exact correspondant mesuré, pour la compensation dynamique du balourd est plus grand que l'écart de masse admissible pour la compensation statique du balourd et
   • on fixe sur la roue du véhicule une masselotte de compensation correspondant à la masse de compensation du balourd calculée, respectivement en la position angulaire associée et dans le plan de compensation associé.

2. Procédé suivant la revendication 1, **caractérisé en ce que** l'écart de masse pour la compensation dynamique du balourd est au moins deux fois aussi grand que l'écart de masse pour la compensation statique du balourd.

3. Procédé suivant la revendication 1 ou 2, **caractérisé en ce que** l'écart de masse correspond à l'échelon de masse le plus petit qui est disponible pour la compensation du balourd ou à l'un de ses multiples entiers.

4. Procédé suivant l'une des revendications 1 à 3, **caractérisé en ce que**, lorsque que les masses de compensation du balourd qui sont calculées sont? pour la compensation dynamique du balourd, dans certaines tolérances, on passe automatiquement à la compensation statique du balourd.

5. Procédé suivant l'une des revendications 1 à 4, **caractérisé en ce que**, pour une compensation statique du balourd, on effectue en même temps une compensation dynamique du balourd dans les tolérances prescrites à cet effet.

6. Procédé suivant l'une des revendications 1 à 4, **caractérisé en ce que**, pour une compensation dynamique du balourd, on effectue en même temps une compensation statique du balourd dans les tolérances prescrites à cet effet.

7. Procédé suivant la revendication 5, **caractérisé en ce que**, pour le calcul de la masse de compensation du balourd, on choisit, pour la compensation statique du balourd, le plan de compensation dans lequel se trouve la masse de compensation du balourd calculée la plus grande et on modifie pas à pas la position angulaire en rotation de la masselotte de compensation jusqu'à ce que les tolérances prescrites pour la compensation dynamique et statique du balourd soient atteintes ou jusqu'à ce que l'on passe en dessous de ces tolérances.

8. Procédé suivant la revendication 6, **caractérisé en ce que** dans le calcul des masses de compensation du balourd pour la compensation dynamique du balourd, on modifie les positions angulaires pour la compensation du balourd dans les deux plans de compensation en calculant simultanément la masse statique de compensation du balourd à partir des masses de compensation du balourd dynamiques obtenues respectivement et on utilise, pour la compensation dynamique du balourd, les masses de compensation du balourd déterminées dans les positions angulaires pour lesquelles la somme des masses de compensation du balourd est la plus petite.

9. Procédé suivant l'une des revendications 1 à 8, **caractérisé en ce que** l'on arrête l'opération de mesure lorsque les masses de compensation du balourd, calculées à partir des résultats de la mesure d'au moins deux tours de roue successifs, se trouvent à l'intérieur des tolérances prescrites.

10. Procédé suivant la revendication 9, **caractérisé en ce que** l'on forme la moyenne des masses de compensation du balourd calculées pendant deux opérations de mesure successives et on interrompt l'opération de mesure lorsque la moyenne des masses de compensation du balourd calculées se trouve dans les tolérances prescrites.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4854168 A